# EUROPEAN PATENT SPECIFICATION

(11) **EP 2 931 496 B1**
(45) Date of publication and mention of the grant of the patent: **04.07.2018**
(21) Application number: 13864066.9
(22) Date of filing: 05.12.2013
(51) Int. Cl.: B29C 65/42, F02M 35/10, B29C 65/54, B29C 45/14, B29L 31/00, B29C 65/00, B29C 65/48

(54) **AIR DUCT FOR A VEHICLE AND A METHOD FOR FABRICATING AN AIR DUCT**
LUFTLEITUNG FÜR EIN KRAFTFAHRZEUG UND VERFAHREN ZUR HERSTELLUNG EINER LUFTLEITUNG
CONDUITE D'AIR POUR VÉHICULE ET PROCÉDÉ DE FABRICATION DE CONDUITE D'AIR

(30) Priority: 17.12.2012 SE 1251443
(43) Date of publication of application: 21.10.2015
(73) Proprietor: Scania CV AB, 151 87 Södertälje (SE)
(72) Inventor: RYBLAD, Åke, S-152 57 Södertälje (SE)
(74) Representative: Scania CV AB
(86) International application number: PCT/SE2013/051460
(87) International publication number: WO 2014/098730

(56) References cited:
- DE-A1-102004 039 132
- JP-A- 2000 280 353
- JP-A- 2003 154 577
- JP-A- 2003 154 577
- US-A- 5 928 453
- US-A- 6 059 483
- US-A1- 2002 148 427
- US-A1- 2002 148 427
- US-A1- 2003 111 765
- US-A1- 2003 111 765

## Description

### Technical field of the invention

The present invention concerns an air duct and a method for fabricating an air duct, for a vehicle, according to the preambles to the independent claims.

### Background of the invention

Efforts are constantly underway within the automotive industry to improve vehicle fuel economy, even as ever-stricter environmental requirements must be met. This also entails a constant striving to reduce the costs of the components involved, while at the same time retaining or improving their quality.

Air ducts for clean air from a filter to the inlet of the compressor (the turbo) are currently fabricated either as blow-molded plastic parts, cast rubber parts, or sometimes even of metal. The geometries of these ducts are often complex, with the result that injection molding of plastic parts has not been relevant heretofore.

With fabrication processes other than injection molding, some post-processing of the parts must be carried out, as there is often a risk that shavings and burrs may be present in the finished product, and that the surfaces will be rougher than is desirable.

One example of a fabrication process is blow molding, which is one of the most common methods for fabricating hollow-body items of thermoplastic.

Another fabrication process is injection molding. Injection molding is a common fabrication method used primarily for parts of various thermoplastics.
Injection molding is best suited for items that are not hollow bodies, and is used for tubular parts only in special cases.

In connection with air ducts on the clean-air side there is a strong desire for the pipes to have smooth internal surfaces, low weight, a geometry that exhibits component parameters that can be checked, e.g. wall thicknesses, and that exhibit two curve shapes, i.e. the pipe exhibits curve shapes in three dimensions.

Blow molding has traditionally been the first choice for fabricating such pipes but, due to the variations in terms of cross-section and the complex curve shape, the processing of the parts results in high costs and problems in maintaining high quality in the fabrication process.

The oval opening that is present upstream of the air duct results in the need for robotic processing of the inner surface of the opening. Even if this could be solved, variations would still arise in terms of the wall thickness, and it would not be possible to insert components on the inside afterwards, e.g. guide rails for controlling the air flow.

One disadvantage of the air duct pipes that are used today is that it is complicated to fabricate an air duct pipe of sufficiently high quality in terms of purity, weight and the geometric shape such a duct has. In addition, the duct can have a plurality of bend angles, which further complicate its fabrication.
With respect to these disadvantages, the inventor has perceived that they can be avoided by providing an air duct pipe consisting of at least two injection-molded parts that are joined together. Among other things, an improved fabrication process is achieved thereby.

A similar fabrication process is described in US-2010/0192891. That document describes an air [sic] fabrication process for an air duct pipe, for example for a combustion engine. The pipe consists of at least two injection-molded parts. In order to join these parts together, a suitable material is applied by means of casting or injection into the surface (the joint) between the two parts. More specifically, the joint consists of a U-shaped part that runs along the edge of the one injection-molded part and forms a duct when it lies in abutment to a straight part of the second injection-molded part. A suitable material is then sprayed into the formed duct to join to parts to one another.

The object of the present invention is to achieve an improved air duct pipe, and an improved method for fabricating such an air duct pipe in terms of the quality of the compositions of the component pipe parts. This is done to ensure that a uniform surface is obtained on the inside of the pipe, and that the joining duct can be filled with plastic material under high pressure to ensure that the joint is leak-tight.

### Summary of the invention

The foregoing objects are achieved by means of the invention defined by the independent claims.

Preferred embodiments are defined by the dependent claims.

According to the present invention, injection molding of at least two pipe parts that are interconnected is used to form the air duct pipe. An interconnecting duct is created on the interconnecting line where the same plastic material as in the pipe parts is injected to create a leak-tight joint between the pipe parts.

A so-called hot-runner molding system is preferably used to enable control of the injection molding process.

The advantage of using injection molding is that it is a process that yields higher precision in terms of the dimensions, e.g. the wall thicknesses, than other processes, as was discussed above. It is clean and, as in accordance with one embodiment, injecting a sealing seam instead of having to use expensive welding equipment results in a lower fabrication cost. Welding parts with double-bent surfaces is complex, including from the standpoint of meeting leak-tightness and geometry requirements.

The document US2003111765A1 relates to a method which can prevent primary mold products from being deformed or broken during a secondary molding process to improve joining strength of joining portions. In the method for joining a plurality of primary mold products, formed by a separate process with each other, in a secondary molding process, a secondary mold resin is injected to joining portions after the surfaces and of the joining portion of the primary mold products to be joined have been heated.

The document US2002148427A1 relates to an engine intake manifold assembly including a first component having a first mating surface and a second molded plastic component having a second mating surface. The second molded plastic component is adhesively bonded to the first component with an adhesive. The adhesive bond strength exceeds the strength of the second molded plastic component.

The document JP2003154577A relates to a hollow molded object obtained by joining a pair of recessed molded objects and by the solidification of a molten resin through a mating process for mating respective mating parts and of a pair of the recessed molded objects and to form a hollow flow channel between the mating parts and a filling process for filling the hollow flow channel with the molten resin. Further, the hollow flow channel of the hollow molded object is formed from an arcuate surface formed by inside mating parts and expanded toward the hollow part and the bent surface having an almost C-shaped cross section continued to the arcuate surface.

The method according to the invention entails a rapid fabrication process for the air duct pipe. As an exemplary fabrication time, it may be noted that a finished pipe can be fabricated in less than 200 seconds, and preferably in a shorter time than 150 seconds.

According to the invention, the pipe parts are injection molded simultaneously in two injection molds comprising hollow spaces corresponding to each respective part. The injection molds are designed so that, for each of the pipe parts, a part of the interconnecting duct is formed along the edges of the pipe parts that are to be joined to form the finished air duct pipe.

The injection-molded pipe parts are removed from their molds and placed in a third mold comprising a hollow space that corresponds to the finished air duct pipe.

The parts are joined together mechanically in that the respective interconnecting parts are brought into engagement with one another.
An interconnecting duct, i.e. a hollow space, is formed by the two mechanically joined interconnecting parts.

According to one embodiment, the interconnecting part on one of the pipe parts is designed so that a compressive force can be applied to hold the parts in place.

There are preferably guide surfaces arranged on each part to guide the parts in relation to one another so that the inner surfaces of the pipe parts are ultimately disposed in the same plane, so that the joint is smooth on the inside. The interconnecting parts also function as backings when the interconnecting duct is filled with the same plastic material (a thermoplastic).

Finally, the interconnecting duct is filled with the same plastic material as the pipe parts themselves.

### Brief description of the drawings

Figure 1 is a schematic depiction of an air duct pipe according to the present invention.
Figure 2 is a cross-section that shows the interconnection between the pipe parts according to a first embodiment of the invention.
Figure 3 is a cross-section that shows the interconnection between the pipe parts according to a second embodiment of the invention.
Figure 4 is a flow diagram that illustrates the method according to the present invention.

### Detailed description of preferred embodiments of the invention

The same or similar parts in the figures have been designated with the same reference designations.

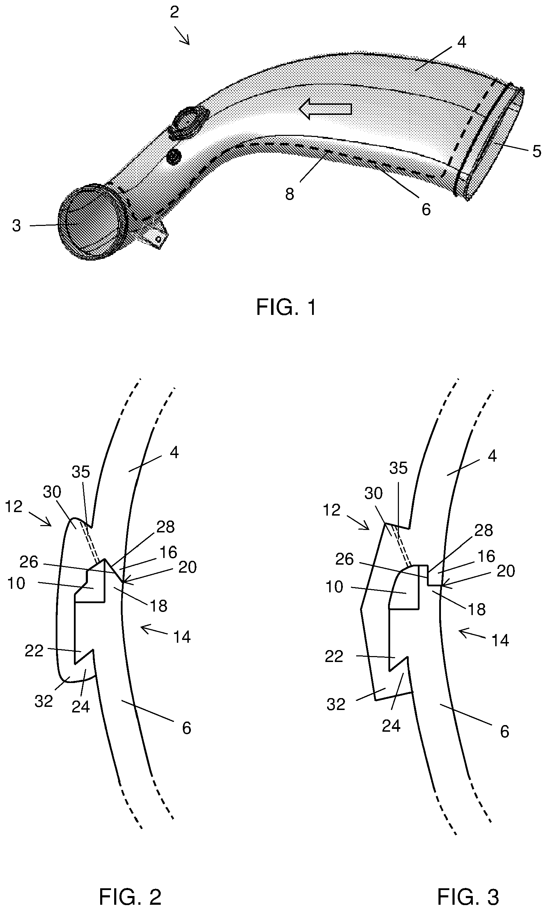

The invention will now be described in detail with reference to the figures. Reference will be made to Figures 1-3 in the description of the air duct pipe.

Figure 1 shows a schematic depiction of an air duct pipe 2 according to the invention. The pipe is intended to be used for a combustion engine, for example in a motor vehicle, in a work machine or in a vessel, and is preferably adapted so as to be arranged so as to conduct clean air from a filter to the inlet of a compressor in connection with the turbo system of the engine.
The air duct pipe exhibits two openings 3, 5. The oval opening 5 is disposed upstream of the air duct pipe. The second opening 3 is preferably circular. The direction of flow is indicated in the figure by an arrow.

The air duct pipe 2 according to the invention comprises two pipe parts 4, 6 that are fabricated of a plastic material by means of injection molding.

Figures 2 and 3 show how these pipe parts are connected to one another along an interconnecting line 8 that consists of an interconnecting duct 10 that is formed by interconnecting parts 12, 14 for each respective pipe part in the area of the connecting line 8. More specifically, the interconnecting duct 10 is formed by means of a hollow space that is formed in mutually facing parts of the interconnecting parts 12, 14, wherein the delimiting walls for the hollow space consist of inner surfaces of the interconnecting parts 12, 14. When the pipe parts are mechanically connected to one another, the interconnecting duct forms a closed duct in which an injection opening is preferably arranged for injecting plastic material into the duct so that the pipe parts 4, 6 are sealingly joined to one another.

The connection parts 12, 14 further comprise inner interconnecting parts 16, 18, which are designed so that they form a uniform connecting surface 20 on the inside of the air duct pipe 2.

The inner interconnecting parts 16, 18 are further adapted so as to absorb pressure from the interconnecting duct 10 during the injection of plastic material into the interconnecting duct. The interconnecting parts 12, 14 further comprise outer interconnecting parts 22, 24, which are adapted so as to mechanically keep the pipe parts interconnected, which is particularly important before the injection of plastic material into the interconnecting duct occurs.

The outer interconnecting parts 22, 24 interwork in that the part 24 has a conformation, e.g. an oblique bevel, that mates with the conformation of the part 22, with the result that the part 24 can be snapped securely in place by the part 22, and thereby mechanically keep the pipe parts interconnected.

According to one embodiment, the inner interconnecting parts 16, 18 exhibit contact surfaces 26, 28 between the interconnecting parts on each pipe part. The contact surfaces comprise a first contact surface 26 and a second contact surface 28. As Figures 2 and 3 show, one of the inner interconnecting parts 18 is designed in such a way that it at least partially constitutes a delimiting wall for the duct 10, while the second of the inner interconnecting parts 16 essentially constitutes the delimiting wall that is turned inward toward the air duct pipe. The interconnecting parts 16 and 18 thus form a joint, in that they are disposed over one other, and in that the contact surfaces are designed in such a way that, during a pressure increase in the interconnecting duct, the first contact surface 26 is pressed against the second contact surface 28.

In the embodiment shown in Figure 2, the contact surfaces 26, 28 are obliquely beveled while, in the embodiment shown in Figure 3, each of the contact surfaces has a step-like conformation, which steps fit into one another. The figure shows a variant with one "step," but it is naturally possible to have a plurality of steps.

The contact surfaces can have other shapes, such as combinations of the embodiments shown in Figures 2 and 3, assuming that they are designed so that they absorb a pressure increase from the interconnecting duct without affecting the connecting surface 20, i.e. that the surface remains uniform.

In the cases of all the designs, the contact surfaces must be designed in such a way that it is possible to thread the one contact surface into the duct part.

The outer interconnecting parts 22, 24 comprise one or a plurality of securing parts 30, 32 adapted so as to keep the pipe parts fixedly secured to one another by applying a securing force to said securing parts during the injection of the plastic material into the interconnecting duct. More specifically, the securing parts 30, 32 exhibit partially radially oriented sections with respect to a cross-section of the air duct pipe. These radially oriented sections constitute an abutment surface for said securing force, which is applied, for example, by a surrounding mold that is used when the plastic material is to be injected into the duct 10.

There are various ways to ensure that the plastic material has filled the duct completely. According to one embodiment, one or a plurality of pressure gauges can be arranged so as provide confirmation that the duct is filled when the pressure exceeds a predetermined threshold value.

According to a second embodiment, which is illustrated in Figures 2 and 3, one or a plurality of small openings 35 are arranged in the interconnecting part 12 so that a connection to the duct is present. When the duct 10 is filled, plastic material appears in the opening 35, which then provides confirmation that the duct is filled.

The two parts can be of different sizes, as is shown in Figure 1. For example, it can be advantageous to allow one of the parts to surround both end parts of the pipe, whereupon any metal parts, such as annular reinforcing rings, can be installed in the cavity (mold) and cast in conjunction with the injection molding.

This type of joint in which injection occurs also makes it possible to secure, for example, metal parts using the same technique, e.g. to secure a metal support near the inlet opening. Such a metal support is shown near one of the openings 3 in Figure 1.

Parts on the inside of the finished product, e.g. supporting struts and guide rails to guide the air flow, can be installed and integrated directly during the injection molding, thereby reducing the need to install parts after the fact, which in turn lowers the fabrication cost.

Figure 1 also shows a number of parts on the outside of the pipe that are integrated in conjunction with the injection molding of one of the pipe parts 4.
To enable, for example, the securing of metal components such as support tubes, this can be done in that the interconnecting duct is joined with surfaces in connection with these metal components, so that plastic that is injected into the duct also reaches the metal components and secures them.

The plastic material that is used is a suitable thermoplastic, preferably polypropylene or a polyamide, which is adapted so as to meet the strength requirements and temperature requirements to which the air duct pipe is subject. The pipe must normally tolerate temperatures within the range of -40 to +90°C, but also up to 150°C in special cases.

As noted above, the injection molding is preferably performed using a hot-runner injection molding technique, which will be described briefly below.

A hot-runner system comprises a number of heated components that are used when injection molding plastics, where molten plastic is injected into cavities in the molds. The cavities thus have the same shape as the parts to be fabricated.

According to one embodiment of the present invention, three molds are used, one mold for each of the pipe parts (if two pipe parts are used), and one mold for the assembled air duct pipe, which is used when the duct is being filled.

There is also so-called cold-runner molding, which is a simpler technique in which a duct is formed between the two halves of the mold in order to conduct plastic from the injection-molding nozzle to the cavities. Each time the mold is opened to remove the molded parts, the material in the duct between the two halves is entrained along as well, which results in the waste of plastic material.
A hot-runner system usually comprises a heated pipe system and a number of heated nozzles. The main task of the pipe system is to distribute the plastic to the various nozzles, which can be controlled so that a precisely determined amount of plastic can be emitted in the cavities at a number of injection points, where, for example, one or a plurality of needle valves are arranged, and which needle valves are precisely controlled so that a correct amount of plastic material is injected.

Hot-runner molding often results in the molds becoming more expensive to fabricate and use, but it enables savings in terms of less wasted plastic, and insofar as the cycle times are reduced.

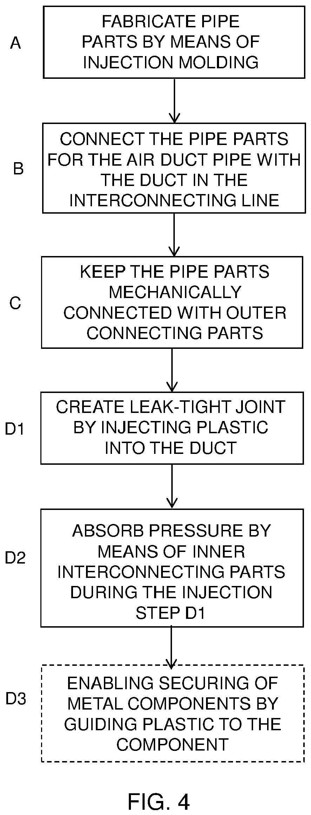

The present invention also concerns a method for fabricating an air duct pipe for a combustion engine, particularly for a motor vehicle.
The method will now be described with reference to the flow diagram in Figure 4.

The method comprises:
A - fabricating at least two pipe parts of a plastic material by means of injection molding;
B - connecting said pipe parts together along an interconnecting line that consists of an interconnecting duct that is formed by interconnecting parts for each pipe part in the area of the interconnecting line, so that the pipe parts become said air duct pipe,

The interconnecting parts comprise inner interconnecting parts that are designed so that they form a uniform connecting surface on the inside of the air duct pipe, while said interconnecting parts comprise outer interconnecting parts that are adapted so as to mechanically keep the pipe parts interconnected.

The method further comprises:
C - keeping the pipe parts mechanically interconnected by means of said outer interconnecting parts;
D1 - creating a leak-tight joint between the pipe parts by injecting said plastic material into said interconnecting duct;
D2 - absorbing pressure from the interconnecting duct by means of said inner interconnecting parts during the injection of said plastic material into the interconnecting duct.

According to one embodiment, the method also comprises the step of:
D3 - enabling the securing of metal components, such as support tubes, in that the interconnecting duct, designated in D2, is joined with surfaces in connection to support tubes.

Reference is made here to the foregoing description of the interconnecting parts, and in particular to the description of the various parts and function of the inner and outer interconnecting parts.

The plastic material consists of a suitable thermoplastic, preferably polypropylene or a polyamide.

According to the invention, the steps A-D2, and preferably the steps A-D3, are performed in a coherent procedure with a maximum duration of 200 seconds. More specifically, the filling time for the pipe parts is on the order of 5 seconds, and they are fabricated simultaneously. The filling time for the interconnecting duct is ca. 2-3 seconds. The additional time is expended so that the parts will cool, and to mechanically join the pipe parts and transfer them to the mold for the air duct pipe.

As noted above, the injection molding occurs using a hot-runner injection molding technique.

The invention also comprises a computer program containing computer program instructions that are configured so as to carry out the steps according to the method as described above when the computer program instructions are run on a computer system, and wherein the computer program product is readable by a computer. More specifically, the computer program instructions control, for example, the time points for injecting the plastic material into the molds and into the duct.

The present invention is not limited to the preferred embodiments described above. Other alternatives, modifications and equivalents can be used. The foregoing embodiments are consequently not to be viewed as limitative of the protective scope of the invention, which is defined in the accompanying claims.

## Claims

1. An air duct pipe (2) for a combustion engine, particularly for a motor vehicle, consisting of at least two pipe parts (4, 6) that are fabricated of a plastic material by means of injection molding and connected to one another along a interconnecting line (8) that consists of an interconnecting duct (10) that is formed by interconnecting parts (12, 14) for each respective pipe part in the area of the interconnecting line (8), which pipe parts (4, 6) are connected to one another and sealingly joined to one another by injecting said plastic material into said interconnecting duct (10),
wherein said interconnecting parts (12, 14) comprise inner interconnecting parts (16, 18) that are designed so that they form a smooth interconnecting surface (20) on the inside of the air duct pipe (2) and are adapted so as to absorb pressure from the interconnecting duct (10) during the injection of said plastic material into the interconnecting duct (10), and in that said interconnecting parts (12, 14) comprise outer interconnecting parts (22, 24) comprising one or a plurality of securing parts (30, 32) adapted so as to keep the pipe parts secured to one another by applying a securing force to said securing parts during the injection of the plastic material into the interconnecting duct, and wherein said securing parts (30, 32) exhibit partly radially oriented sections with respect to a cross-section of the air duct pipe, wherein said radially oriented sections constitute an abutment surface for said securing force,
**characterized in that**
said outer interconnecting parts (22, 24) are adapted so as to mechanically keep the pipe parts interconnected, and wherein the outer interconnecting parts (22, 24) interwork **in that** a first part (24) of the outer interconnecting parts (22, 24) has a conformation, in the form of an oblique bevel, that mates with a conformation, in the form of an oblique bevel, of a second part (22) of the outer interconnecting parts (22, 24), with the result that the first part (24) can be snapped in place by the second part (22), and thereby mechanically keep the pipe parts (4, 6) interconnected.

2. The air duct pipe according to claim 1, wherein said interconnecting parts exhibit contact surfaces (26, 28) between the interconnecting parts on each respective pipe part, which contact surfaces comprise a first contact surfaced (26) and a second contact surface (28), and which contact surfaces are designed so that, during a pressure increase in the interconnecting duct, the first contact surface (26) is pressed against the second contact surface (28).

3. The air duct pipe according to claim 2, wherein said contact surfaces (26, 28) are obliquely beveled.

4. The air duct pipe according to any of the preceding claims, wherein the injection molding occurs by means of a hot-runner injection molding technique.

5. The air duct pipe according to any of the preceding claims, wherein said plastic material is a thermoplastic, preferably polypropylene or a polyamide.

6. A method for fabricating an air duct pipe (2) for a combustion engine, particularly for a motor vehicle, wherein the method comprises:
A - fabricating at least two pipe parts (4, 6) of a plastic material by means of injection molding;
B - connecting said pipe parts together along an interconnecting line that consists of an interconnecting duct (10) that is formed by interconnecting parts (12, 14) for each respective pipe part in the area of the interconnecting line (8), so that the pipe parts form said air duct pipe (2), wherein said interconnecting parts (12, 14) comprise inner interconnecting parts (16, 18) that are designed so that they form a uniform interconnecting surface (20) on the inside of the air duct pipe, and in that said interconnecting parts (12, 14) comprise outer interconnecting parts (22, 24) comprising one or a plurality of securing parts (30, 32) adapted so as to keep the pipe parts secured to one another by applying a securing force to said securing parts during the injection of the plastic material into the interconnecting duct, and wherein said securing parts (30, 32) exhibit partially radially oriented sections with respect to a cross-section of the air duct pipe, wherein said radially oriented sections constitute abutment surfaces for said securing force,
**characterized in that**
the outer interconnecting parts (22, 24) are adapted so as to mechanically keep the pipe parts interconnected, and wherein the the outer interconnecting parts interwork **in that** a first part (24) of the outer interconnecting parts has a conformation, in the form of an oblique bevel, that mates with a conformation, in the form of an oblique bevel, of a second part (22) of the outer interconnecting parts, and **in that** the method further comprises:
C - keeping the pipe parts mechanically interconnected by means of said outer interconnecting parts (22, 24) by snapping the first part in place by the second part;
D1 - creating a leak-tight seal between the pipe parts by injecting said plastic material into said interconnecting duct (10);
D2 - absorbing pressure, by means of said inner interconnecting parts (16, 18), from the interconnecting duct (10) during the injection of said plastic material into the interconnecting duct (10).

7. The method according to claim 6, wherein the method comprises:
D3 - enabling the securing of metal components, such as support tubes, in that the interconnecting duct (10) mentioned in D2 is joined with surfaces in abutment to said metal components.

8. The method according to claim 6 or 7, wherein said inner interconnecting parts (16, 18) exhibit contact surfaces between the interconnecting parts on each respective pipe part, which contact surfaces comprise a first contact surface and a second contact surface, and wherein the contact surfaces are designed so that, during a pressure increase in the interconnecting duct (10), the first contact surface (26) is pressed against the second contact surface (28).

9. The method according to claim 8, wherein said contact surfaces are obliquely beveled.

10. The method according to any of claims 6-9, wherein the injection molding occurs by means of a hot-runner injection molding technique.

11. The method according to any of claims 6-10, wherein said plastic material is a thermoplastic, preferably polypropylene or a polyamide.

12. The method according to any of claims 6-11, wherein the steps A-D2 are performed in a coherent procedure with a maximum duration of 200 seconds.

13. A computer program product comprising computer program instructions that are configured so as to perform the steps according to any of claims 6-12 when the computer program instructions are run on a computer system, which computer program product is readable by a computer.

## Patentansprüche

1. Luftrohrleitung (2) für einen Verbrennungsmotor, insbesondere für ein Kraftfahrzeug, die aus mindestens zwei aus einem Kunststoffmaterial mittel Spritzgießen hergestellten Rohrteilen (4, 6) besteht, die miteinander entlang einer Verbindungsleitung (8) verbunden sind, die aus einem Verbindungskanal (10) besteht, der aus Verbindungsteilen (12, 14) für jedes Rohrteil im Bereich der Verbindungsleitung (8) ausgebildet ist, wobei die Rohrteile (4, 6) miteinander verbunden sind und aneinander durch Einspritzen des Kunststoffmaterials in den Verbindungskanal (10) abgedichtet gekoppelt sind,
wobei die Verbindungsteile (12, 14) innere Verbindungsteile (16, 18) aufweisen, die so ausgeführt sind, dass sie eine glatte Verbindungsfläche (20) auf der Innenseite der Luftrohrleitung (2) bilden, und dazu eingerichtet sind, Druck vom Verbindungskanal (10) während des Einspritzens des Kunststoff materials in den Verbindungskanal (10) zu absorbieren, und wobei die Verbindungsteile (12, 14) äußere Verbindungsteile (22, 24) aufweisen, die ein oder eine Mehrzahl Befestigungsteile (30, 32) aufweisen, die so ausgeführt sind, dass sie die Rohrteile durch Aufbringen einer Befestigungskraft auf die Befestigungsteile während des Einspritzens des Kunststoffmaterials in den Verbindungskanal aneinander befestigt halten, und wobei die Befestigungsteile (30, 32) teilweise radial ausgerichtete Abschnitte relativ zum Querschnitt der Luftrohrleitung aufweisen, wobei die radial ausgerichteten Abschnitte eine Anlagefläche für die Befestigungskraft bilden,
**dadurch gekennzeichnet, dass**
die äußeren Verbindungsteile (22, 24) so ausgeführt sind, dass sie die Rohrteile mechanisch miteinander verbunden halten, und wobei die äußeren Verbindungsteile (22, 24) so zusammenwirken, dass ein erstes Teil (24) der äußeren Verbindungsteile (22, 24) eine Ausgestaltung in Form einer schrägen Fase aufweist, die mit einer Ausgestaltung in Form einer schrägen Fase eines zweiten Teils (22) der äußeren Verbindungsteile (22, 24) übereinstimmt, mit dem Ergebnis, dass das erste Teil (24) der äußeren Verbindungsteile (22, 24) durch das zweite Teil (22) eingerastet werden kann und dadurch die Rohrteile (4, 6) mechanisch miteinander verbunden hält.

2. Luftrohrleitung nach Anspruch 1, wobei die Verbindungsteile Kontaktoberflächen (26, 28) zwischen den Verbindungsteilen auf jedem entsprechenden Rohrteil aufweisen, wobei die Kontaktoberflächen eine erste Kontaktoberfläche (26) und eine zweite Kontaktoberfläche (28) aufweisen, und wobei die Kontaktoberflächen so ausgeführt sind, dass während eines Druckanstiegs im Verbindungskanal die erste Kontaktoberfläche (26) gegen die zweite Kontaktoberfläche (28) gepresst wird.

3. Luftrohrleitung nach Anspruch 2, wobei die Kontaktoberflächen (26, 28) schräg angefast sind.

4. Luftrohrleitung nach einem der vorigen Ansprüche, wobei das Spritzgießen mittels einer Heißkanal-Spritzgießtechnik erfolgt.

5. Luftrohrleitung nach einem der vorigen Ansprüche, wobei das Kunststoffmaterial ein Thermoplast ist, vorzugsweise Polypropylen oder Polyamid.

6. Verfahren zur Herstellung einer Luftrohrleitung (2) für einen Verbrennungsmotor, insbesondere für ein Kraftfahrzeug, wobei das Verfahren aufweist:
A- Herstellen mindestens zweier Rohrteile (4, 6) aus einem Kunststoffmaterial durch Spritzgießen;
B- Verbinden der Rohrteile miteinander entlang einer Verbindungsleitung, die aus einem Verbindungskanal (10) besteht, der aus Verbindungsteilen (12, 14) für jedes Rohrteil im Bereich der Verbindungsleitung (8) ausgebildet ist, so dass die Rohrteile die Luftrohrleitung (2) bilden, wobei die Verbindungsteile (12, 14) innere Verbindungsteile (16, 18) aufweisen, die so ausgeführt sind, dass sie eine gleichmäßige Verbindungsfläche (20) auf der Innenseite der Luftrohrleitung bilden, und dass die Verbindungsteile (12, 14) äußere Verbindungsteile (22, 24) aufweisen, die ein Befestigungsteil (30, 32) oder eine Mehrzahl Befestigungsteile (30, 32) aufweisen, die so ausgeführt sind, dass sie die Rohrteile durch Aufbringen einer Befestigungskraft auf die Befestigungsteile während des Einspritzens des Kunststoffmaterials in den Verbindungskanal aneinander befestigt halten, und wobei die Befestigungsteile (30, 32) teilweise radial ausgerichtete Abschnitte relativ zum Querschnitt der Luftrohrleitung aufweisen, wobei die radial ausgerichteten Abschnitte Anlageflächen für die Befestigungskraft bilden,
**dadurch gekennzeichnet, dass**
die äußeren Verbindungsteile (22, 24) so ausgeführt sind, dass sie die Rohrteile mechanisch miteinander verbunden halten, und wobei die äußeren Verbindungsteile so zusammenwirken, dass ein erstes Teil (24) der äußeren Verbindungsteile eine Ausgestaltung in Form einer schrägen Fase hat, die mit einer Ausgestaltung in Form einer schrägen Fase eines zweiten Teils (22) der äußeren Verbindungsteile übereinstimmt,
und dass das Verfahren ferner aufweist:
C- Halten der Rohrteile mittels der äußeren Verbindungsteile (22, 24) durch Einrasten des ersten Teils (24) durch das zweite Teil (22) mechanisch miteinander verbunden;
D1 - Herstellen einer leckdichten Dichtung zwischen den Rohrteilen mittels Einspritzen des Kunststoffmaterials in den Verbindungskanal (10);
D2 - Absorbieren des Drucks vom Verbindungskanal (10) mittels der inneren Verbindungsteile (16, 18) während des Einspritzens des Kunststoffmaterials in den Verbindungskanal (10).

7. Verfahren nach Anspruch 6, wobei das Verfahren aufweist:
D3 - Ermöglichen der Befestigung von Metallkomponenten wie Stützrohre, so dass der in D2 genannte Verbindungskanal (10) mit Oberflächen an den Metallkomponenten anliegend verbunden wird.

8. Verfahren nach Anspruch 6 oder 7, wobei die inneren Verbindungsteile (16, 18) Kontaktoberflächen zwischen den Verbindungsteilen auf jedem entsprechenden Rohrteil aufweisen, wobei die Kontaktoberflächen eine erste Kontaktoberfläche und eine zweite Kontaktoberfläche aufweisen, und wobei die Kontaktoberflächen so ausgeführt sind, dass während eines Druckanstiegs im Verbindungskanal (10) die erste Kontaktoberfläche (26) gegen die zweite Kontaktoberfläche (28) gepresst wird.

9. Verfahren nach Anspruch 8, wobei die Kontaktoberflächen schräg angefast sind.

10. Verfahren nach einem der Ansprüche 6 bis 9, wobei das Spritzgießen mittels einer Heißkanal-Spritzgießtechnik erfolgt.

11. Verfahren nach einem der Ansprüche 6 bis 10, wobei das Kunststoffmaterial ein Thermoplast ist, vorzugsweise Polypropylen oder Polyamid.

12. Verfahren nach einem der Ansprüche 6 bis 11, wobei die Schritte A bis D2 in einer durchgängigen Prozedur mit einer maximalen Dauer von 200 Sekunden ausgeführt werden.

13. Computerprogrammprodukt, das Computerprogrammanweisungen aufweist, die zur Ausführung der Schritte nach einem der Ansprüche 6 bis 12 konfiguriert sind, wenn die Computerprogrammanweisungen auf einem Computersystem ablaufen, wobei das Computerprogrammprodukt von einem Computer gelesen werden kann.

## Revendications

1. Tuyau de conduite d'air (2) pour un moteur à combustion, en particulier pour un véhicule à moteur, constitué d'au moins deux parties de tuyau (4, 6) qui sont fabriquées en matière plastique au moyen d'un moulage par injection et reliées l'une à l'autre le long d'une ligne d'interconnexion (8) constituée d'une conduite d'interconnexion (10) qui est formée par des parties d'interconnexion (12, 14) pour chaque partie de tuyau respective dans la zone de la ligne d'interconnexion (8), lesquelles parties de tuyau (4, 6) sont reliées l'une à l'autre et raccordées de manière étanche l'une à l'autre en injectant ladite matière plastique dans ladite conduite d'interconnexion (10),
dans lequel lesdites parties d'interconnexion (12, 14) comprennent des parties d'interconnexion intérieures (16, 18) qui sont conçues de manière à former une surface d'interconnexion lisse (20) sur l'intérieur du tuyau de conduite d'air (2) et sont adaptées pour absorber une pression provenant de la conduite d'interconnexion (10) pendant l'injection de ladite matière plastique dans la conduite d'interconnexion (10), et lesdites parties d'interconnexion (12, 14) comprennent des parties d'interconnexion extérieures (22, 24) comprenant une ou une pluralité de parties de fixation (30, 32) adaptées pour maintenir les parties de tuyau fixées l'une à l'autre en appliquant une force de fixation auxdites parties de fixation pendant l'injection de la matière plastique dans la conduite d'interconnexion, et dans lequel lesdites parties de fixation (30, 32) affichent des coupes partiellement orientées radialement par rapport à une coupe transversale du tuyau de conduite d'air, dans lequel lesdites coupes orientées radialement constituent une surface de butée pour ladite force de fixation,
**caractérisé en ce que**
lesdites parties d'interconnexion extérieures (22, 24) sont adaptées de façon à maintenir mécaniquement les parties de tuyau interconnectées, et dans lequel les parties d'interconnexion extérieures (22, 24) fonctionnent mutuellement en ce sens qu'une première partie (24) des parties d'interconnexion extérieures (22, 24) a une conformation, sous la forme d'un biseau oblique, qui s'accouple avec une conformation, sous la forme d'un biseau oblique, d'une seconde partie (22) des parties d'interconnexion extérieures (22, 24), avec pour résultat que la première partie (24) peut être clipsée en place par la seconde partie (22), et ainsi maintenir mécaniquement les parties de tuyau (4, 6) interconnectées.

2. Tuyau de conduite d'air selon la revendication 1, dans lequel lesdites parties d'interconnexion affichent des surfaces de contact (26, 28) entre les parties d'interconnexion sur chaque partie de tuyau respective, lesquelles surfaces de contact comprennent une première surface de contact (26) et une seconde surface de contact (28), et lesquelles surfaces de contact sont conçues de sorte que, pendant une augmentation de pression dans la conduite d'interconnexion, la première surface de contact (26) est pressée contre la seconde surface de contact (28).

3. Tuyau de conduite d'air selon la revendication 2, dans lequel lesdites surfaces de contact (26, 28) sont biseautées obliquement.

4. Tuyau de conduite d'air selon l'une quelconque des revendications précédentes, dans lequel le moulage par injection a lieu au moyen d'une technique de moulage par injection à canaux chauds.

5. Tuyau de conduite d'air selon l'une quelconque des revendications précédentes, dans lequel ladite matière plastique est une matière thermoplastique, de préférence du polypropylène ou un polyamide.

6. Procédé de fabrication d'un tuyau de conduite d'air (2) pour un moteur à combustion, en particulier pour un véhicule à moteur, dans lequel le procédé comprend :
A - fabriquer au moins deux parties de tuyau (4, 6) en matière plastique au moyen d'un moulage par injection ;
B - relier lesdites parties de tuyau ensemble le long d'une ligne d'interconnexion qui est constituée d'une conduite d'interconnexion (10) qui est formée par des parties d'interconnexion (12, 14) pour chaque partie de tuyau respective dans la zone de la ligne d'interconnexion (8), de sorte que les parties de tuyau forment ledit tuyau de conduite d'air (2),
dans lequel lesdites parties d'interconnexion (12, 14) comprennent des parties d'interconnexion intérieures (16, 18) qui sont conçues de manière à former une surface d'interconnexion uniforme (20) sur l'intérieur du tuyau de conduite d'air, et lesdites parties d'interconnexion (12, 14) comprennent des parties d'interconnexion extérieures (22, 24) comprenant une ou une pluralité de parties de fixation (30, 32) adaptées pour maintenir les parties de tuyau fixées l'une à l'autre en appliquant une force de fixation sur lesdites parties de fixation pendant l'injection de la matière plastique dans la conduite d'interconnexion, et dans lequel lesdites parties de fixation (30, 32) affichent des coupes partiellement orientées radialement par rapport à une coupe transversale du tuyau de conduite d'air, dans lequel lesdites coupes orientées radialement constituent des surfaces de butée pour ladite force de fixation,
**caractérisé en ce que** les parties d'interconnexion extérieures (22, 24) sont adaptées pour maintenir mécaniquement les parties de tuyau interconnectées, et dans lequel les parties d'interconnexion extérieures fonctionnent mutuellement en ce sens qu'une première partie (24) des parties d'interconnexion extérieures a une conformation, sous la forme d'un biseau oblique, qui s'accouple avec une conformation, sous la forme d'un biseau oblique, d'une seconde partie (22) des parties d'interconnexion extérieures, et **en ce que** le procédé comprend en outre :
C - maintenir les parties de tuyau interconnectées mécaniquement au moyen desdites parties d'interconnexion extérieures (22, 24) en clipsant la première partie en place par la seconde partie ;
D1 - créer un joint étanche aux fuites entre les parties de tuyau en injectant ladite matière plastique dans ladite conduite d'interconnexion (10) ;
D2 - absorber une pression, au moyen desdites parties d'interconnexion intérieures (16, 18), provenant de la conduite d'interconnexion (10) lors de l'injection de ladite matière plastique dans la conduite d'interconnexion (10).

7. Procédé selon la revendication 6, dans lequel le procédé comprend :
D3 - permettre la fixation de composants métalliques, tels que des tubes de support, de sorte que la conduite d'interconnexion (10) mentionnée à l'étape D2 est raccordée à des surfaces en butée avec lesdits composants métalliques.

8. Procédé selon la revendication 6 ou 7, dans lequel lesdites parties d'interconnexion intérieures (16, 18) affichent des surfaces de contact entre les parties d'interconnexion sur chaque partie de tuyau respective, lesquelles surfaces de contact comprennent une première surface de contact et une seconde surface de contact, et dans lequel les surfaces de contact sont conçues de telle sorte que, lors d'une augmentation de pression dans la conduite d'interconnexion (10), la première surface de contact (26) est pressée contre la seconde surface de contact (28).

9. Procédé selon la revendication 8, dans lequel lesdites surfaces de contact sont obliquement biseautées.

10. Procédé selon l'une quelconque des revendications 6 à 9, dans lequel le moulage par injection a lieu au moyen d'une technique de moulage par injection à canaux chauds.

11. Procédé selon l'une quelconque des revendications 6 à 10, dans lequel ladite matière plastique est une matière thermoplastique, de préférence du polypropylène ou un polyamide.

12. Procédé selon l'une quelconque des revendications 6 à 11, dans lequel les étapes A-D2 sont réalisées en suivant une procédure cohérente ayant une durée maximale de 200 secondes.

13. Produit de programme d'ordinateur comprenant des instructions de programme d'ordinateur qui sont configurées de manière à effectuer les étapes selon l'une quelconque des revendications 6 à 12 lorsque les instructions de programme d'ordinateur sont exécutées sur un système informatique, lequel produit de programme d'ordinateur est lisible par un ordinateur.
